# EUROPEAN PATENT APPLICATION

(11) **EP 3 273 718 A1**
(43) Date of publication of application: **24.01.2018**
(21) Application number: 17178471.3
(22) Date of filing: 28.06.2017
(51) Int. Cl.: H04W 28/02, H04W 52/04

(54) **APPARATUS AND METHOD FOR MONITORING TRAFFIC**

(30) Priority: 19.07.2016 JP 2016141521
(71) Applicant: Fujitsu Limited, Kawasaki-shi, Kanagawa 211-8588 (JP)
(72) Inventor: NAGATA, Nami, Kanagawa 211-8588 (JP)
(74) Representative: Haseltine Lake LLP

(57) **Abstract**

A traffic monitoring apparatus includes a generation unit that generates information with respect to a channel capacity between a wireless communication apparatus and a wireless terminal, based on throughput in communication between the wireless communication apparatus and the wireless terminal and a discard number of packets that are transmission objects from the wireless communication apparatus to the wireless terminal, and an output unit that outputs the information with respect to the channel capacity.

## Description

### FIELD

The present invention relates to an apparatus and a method for monitoring a traffic.

### BACKGROUND

There is a wireless communication apparatus to operate as a base station or an access point that wirelessly communicates with a plurality of wireless terminals in the coverage, and to operate as a gateway that transmits the data acquired from the wireless terminals, to an external network.

For further information, see Japanese Laid-Open Patent Publication No. 2011-244369.

### SUMMARY

A wireless communication system including the above wireless communication apparatus and wireless terminals can be operated in a situation where the number of wireless terminals in the coverage and the number or interference level of interference sources in the periphery are increased or decreased after the installation. That is, the channel capacity fluctuates depending on the change in environment after the installation.

It is difficult to predict the environment change after the installation, and therefore, it is conceivable to set a channel capacity that has a margin and that is larger than a predicted traffic amount, at the time of the design of the wireless communication system. However, a large margin causes the problem of the increase in the cost of the wireless communication apparatus. On the other hand, in the case of a small margin, there is a concern that a demanded throughput is not satisfied by the decrease in the channel capacity due to the environment change.

It is desirable to provide a program, a traffic monitoring apparatus and a traffic monitoring method that make is possible to know the channel capacity between the wireless communication apparatus and the wireless terminal.

According to an embodiment of one aspect of the invention, there is provided a non-transitory computer-readable recording medium having stored therein a program for causing a computer to execute a process including outputting information with respect to a channel capacity between a wireless communication apparatus and a wireless terminal, based on throughput in communication between the wireless communication apparatus and the wireless terminal and a discard number of packets that are transmission objects from the wireless communication apparatus to the wireless terminal.

### BRIEF DESCRIPTION OF THE DRAWINGS

The invention is described, by way of example only, with reference to the following drawings, in which:
Fig. 1 is a diagram illustrating an example of a wireless communication system;
FIG. 2A is a graph illustrating a relation between throughput and generated traffic;
FIG. 2B is a graph illustrating a relation between generated traffic and packet discard number;
FIG. 3 is a table indicating throughput, packet discard number and resource usage condition (a relation with channel capacity);
FIG. 4 is a diagram illustrating a hardware construction example of a GW (wireless communication apparatus);
FIG. 5 is a diagram schematically illustrating the function of the GW in Embodiment 1;
FIG. 6 is a flowchart illustrating a process example in a received data amount measurement unit (CPU);
FIG. 7 is a flowchart illustrating a process example in a transmission data amount measurement unit (CPU);
FIG. 8 is a flowchart illustrating a process example in a throughput calculation unit (CPU);
FIG. 9 is a flowchart illustrating a process example in a packet discard number acquisition unit (CPU);
FIG. 10 is a flowchart illustrating a process example in a maximal throughput determination unit (CPU);
FIG. 11 is a diagram schematically illustrating the function of a GW in Embodiment 2;
FIG. 12 is a flowchart illustrating a process example in a resource usage condition determination unit (CPU);
FIG. 13 is a flowchart illustrating a process example in the maximal throughput determination unit in Embodiment 2;
FIG. 14 is a diagram schematically illustrating the function of a GW in Embodiment 3;
FIG. 15 is a flowchart illustrating a process example in a transmission data amount measurement unit (CPU) in Embodiment 3;
FIG. 16 is a flowchart illustrating a process example in a transmission interval determination unit (CPU);
FIG. 17 is a diagram schematically illustrating the function of a GW in Embodiment 4;
FIG. 18 is a diagram schematically illustrating the function of a GW in Embodiment 5;
FIG. 19 illustrates a data structure example of a table indicating a relation between identifiers of wireless terminals and attenuation amounts of RSSI;
FIG. 20 is a flowchart illustrating a process example in a received power monitoring unit (CPU);
FIG. 21 is an explanatory diagram for Embodiment 5; and
FIG. 22 is a diagram schematically illustrating the function of a wireless terminal.

### DETAILED DESCRIPTION OF EMBODIMENT

Hereinafter, embodiments of a program, a traffic monitoring apparatus and a traffic monitoring method will be described with reference to the drawings. However, the constructions of the embodiments are examples, and the present invention is not limited to the constructions of the embodiments.

### [Embodiment 1]

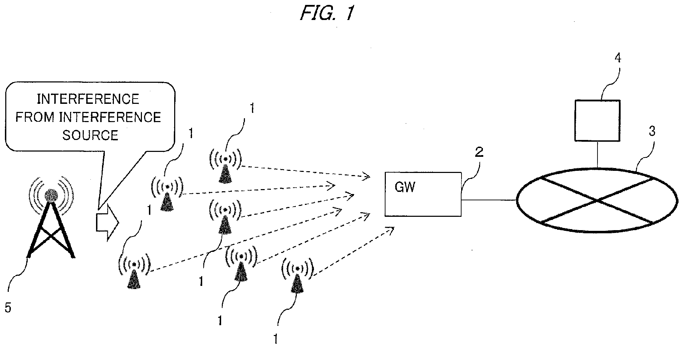

FIG. 1 illustrates an example of a wireless communication system. FIG. 1 exemplifies a wireless communication system including a plurality of wireless terminals 1 and a gateway apparatus (GW) 2 that has the plurality of wireless terminals (stations: also referred to as STA) 1 in the coverage. The GW 2 is an exemplary "traffic monitoring apparatus".

The GW 2 has a function to wirelessly communicate with the wireless terminals 1 as base stations for the wireless terminals 1, and a gateway function for an external network 3 connected with the GW 2. As an example, the wireless communication system is applied to an IoT (Internet of Things) network.

The wireless terminals 1, for example, transmit the information (sensing data) detected by unillustrated sensors, to the GW 2. The GW 2 transmits the information obtained from the wireless terminals 1, to a communication apparatus 4 that is an information destination (communication partner) and that is connected with the external network 3. The GW 2 transmits, to the wireless terminals 1, the data received from the communication apparatus 4, or the control data for the wireless terminals 1. The wireless communication system can be used for purposes other than IoT.

Examples of the wireless communication standard (including the near field wireless communication standard) to be used for the wireless communication between the GW 2 and the wireless terminal 1 include Wireless Local Area Network (LAN) (IEEE 802.11 series), ZigBee, and Bluetooth (R). However, a standard other than these wireless communication standards may be applied.

In the wireless communication system, during the operation, the number of wireless terminals 1 increases or decreases, the number of interference sources 5 increases or decreases, or the interference level from the interference sources 5 increases or decreases. The GW 2 communicates with the wireless terminals 1, for example, with a quality demanded by a communication destination (the communication apparatus 4 (an application implemented in the communication apparatus 4)).

The GW 2 monitors the total value (throughput (TP)) of the transmission amount and reception amount of packets that are transmitted and received through a wireless (radio) interface (wireless IF) included in the GW 2. Furthermore, the GW 2 monitors the discard number (defined as Nploss) of packets on the MAC (Media Access Control) layer that are intended to be transmitted from the GW 2 to the wireless terminal 1. The GW 2 monitors the throughput and the packet discard number in parallel, and estimates, using these, the change in channel capacity (also referred to as communication path capacity) due to the change in environment.

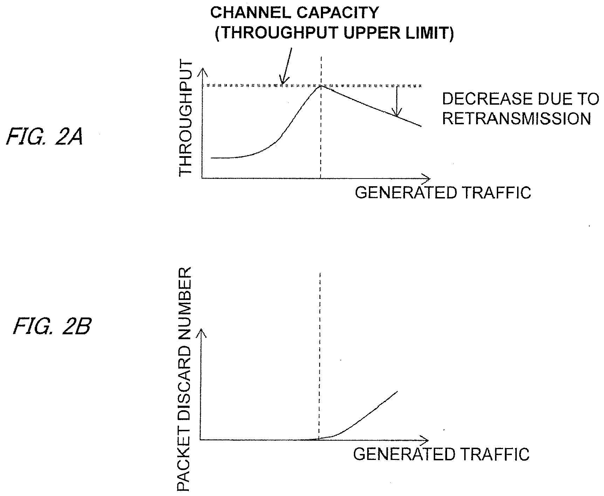

FIG. 2A is a graph illustrating a relation between the throughput and the generated traffic, and FIG. 2B is a graph illustrating a relation between the generated traffic and the packet discard number. As illustrated in FIG. 2A, when the traffic amount increases, the throughput (TP = transmission amount + reception amount) increases. Eventually, the throughput reaches the upper limit, and thereafter, decreases. This is because the traffic amount exceeds the channel capacity so that the corruption, loss or discard of packets due to the collision of packets and the like occurs and a retransmission process occurs.

The packet to be transmitted from the GW 2 to the wireless terminal 1 is temporarily stored in a transmission queue, and is transmitted at an appropriate timing. When the traffic amount exceeds the channel capacity, the packet discard occurs because of the overflow of the transmission queue, the exceedance of the maximal waiting time in the transmission queue, or the like.

As illustrated in FIG. 2B, the increase in the discard number of the transmission packet occurs after the throughput reaches the upper limit. Therefore, the determination of "packet discard occurrence ≈ channel capacity exceedance" is possible. That is, the maximal throughput at the time of the occurrence of the packet discard can be handled as the channel capacity at that time. The GW 2 uses the maximal throughput as the index value of the channel capacity.

In many cases, the packet discard number is measured by the firmware of a wireless module or a driver implemented in the GW 2, and it is possible to acquire the packet discard number by inputting an inquiry command to a proper interface of the driver.

For example, Linux (R), which is an operating system (OS), makes it possible to add a function called SoftAP, by which a computer implemented in the GW 2 operates as an access point (AP) for a wireless LAN. In the case of "hostapd", which is one of the SoftAP, it is possible to acquire the packet discard number from the wireless LAN driver, by using a program called "hostapd_cli" or by using "iwconfig", which is a reference command in the wireless LAN interface. Alternatively, in some access points for the wireless LAN or some controllers for the wireless LAN, the software (including firmware) that outputs the packet discard number by the input of a predetermined command is implemented.

It is possible to employ a construction of applying such software for measuring the packet discard number and inquiring the packet discard number. In this case, it is possible to avoid a new development or an improvement of the driver or the firmware for acquiring the packet discard number, and therefore, it is possible to reduce the scale of the development for the implementation of the monitoring function in the GW 2.

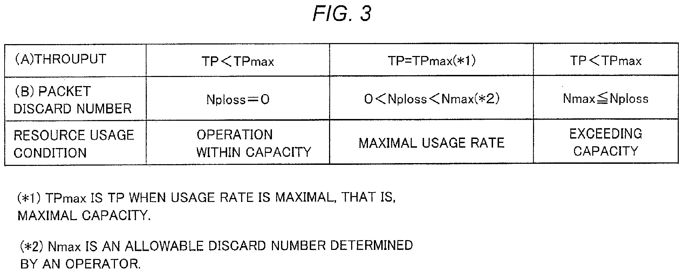

The GW 2 estimates the current resource usage rate (channel capacity), using (A) throughput and (B) packet discard number. FIG. 3 is a table indicating the throughput, the packet discard number and the resource usage condition (a relation with the channel capacity).

"TP" in the table of FIG. 3 indicates the throughput (packet transmission amount + packet reception amount). "TPmax" indicates the TP when the usage rate of the resource is maximal, that is, the maximal capacity. "Nmax" is a previously determined allowable discard number of packets, and is determined, for example, by an operator of the wireless communication system.

In the example indicated in the table, when the throughput TP is smaller than TPmax and Nploss is 0, it is determined that the operation is being performed such that the packet transmitting/receiving (traffic) is within the channel capacity (case 1). When TP is equal to TPmax and Nploss is larger than 0 and smaller than Nmax (or equal to or larger than Nmax), it is determined that the resource usage rate is maximal (the upper limit of the throughput = the channel capacity) (case 2). Furthermore, when TP is smaller than TPmax and Nploss is equal to or larger than Nmax (or exceeding Nmax), it is determined that the traffic amount is exceeding the channel capacity (case 3). In the determinations of case 1 and case 3, the determination may be made based on the value of Nploss, without using the value of the throughput TP.

In case 3, a manual alteration of the system construction or an automatic control for resolving the state of the exceedance of the channel capacity in the GW 2 is performed. For example, the alteration of parameters such as packet transmission cycle, the alteration of the destination point of the wireless terminal 1 (in the case where the used frequency channel of the destination point after the alteration is different from the frequency channel of the former destination point), or the addition (new installation) of the GW is performed.

For example, in the case where Nploss satisfies 0 < Nploss < Nmax and where TP is larger than TPmax, the interference from the interference source 5 decreases, and thereby, the increase in the channel capacity can be estimated. In this case, the value of TPmax is updated to the current value of TP. In the following, the detail of the GW 2 will be described.

### <Construction Example of GW>

### «Hardware Construction Example»

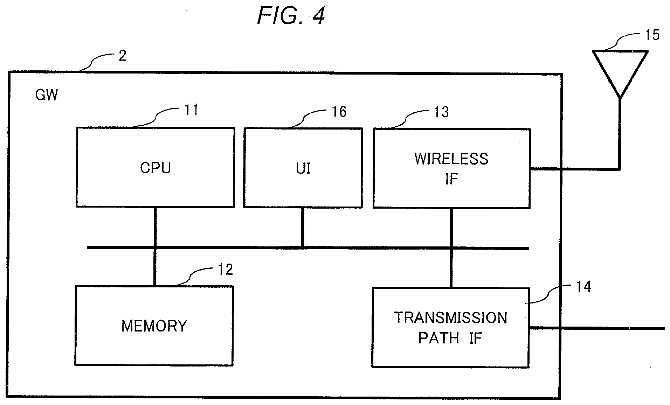

FIG. 4 is a diagram illustrating a hardware construction example of the GW 2. In FIG. 4, the GW 2 includes a central processing unit (CPU) 11, a memory 12, a wireless interface (wireless IF) 13, a transmission path interface (transmission path IF) 14, and a user interface (UI) 16, which are mutually connected through a bus. The wireless IF 13 is connected with an antenna 15.

The memory 12 includes a main storage and an auxiliary storage. The main storage is used as a deployment area for a program, a work area for the CPU 11, or a storage area or buffer area for data and a program. For example, the main storage is formed by a random access memory (RAM) or by the combination of the RAM and a read only memory (ROM).

The auxiliary storage is used as a storage area for data and a program. For example, the auxiliary storage is formed by a non-volatile storage medium such as a hard disk drive (HDD), a solid state drive (SSD), a flash memory, and an electrically erasable programmable read-only memory (EEPROM). The auxiliary storage can include a removable recording medium such as a disk-type storage medium and a USB memory. The memory 12 (each of the main storage and the auxiliary storage) is an exemplary "storage", "storage medium", "memory" or "storage unit".

The wireless IF 13 includes a baseband circuit (BB circuit) and a radio frequency (RF) circuit. The BB circuit performs a conversion process between a data (digital) signal and a baseband signal (BB signal). The RF circuit performs a conversion process between the BB signal and a wireless signal. The wireless signal is transmitted and received by the antenna 15.

The transmission path IF 14 is connected with the external network 3 through a transmission path (for example, a wired LAN) . For example, a LAN card (network interface card) can be applied as the transmission path IF 14.

The UI 16 includes an input device and an output device. The input device is used for the input of data and information. The input device is, for example, a key, a button, a pointing device (a mouse or the like), a touch panel, or a microphone. The output device is used for the output of information. The output device is a display device, a speaker, a lamp or the like.

The CPU 11 loads and executes a program stored in the memory 12. By the execution of the program by the CPU 11, the GW 2 performs various processes and operations. The CPU 11 is an exemplary "control device", "control unit", "controller" or "processor".

The CPU is also called a MPU (Microprocessor) or a processor. The CPU is not limited to a single processor, and may have a multiprocessor construction. Further, a single CPU connected with a single socket may have a multi-core construction. At least some of the processes that are performed by the CPU may be performed by processors other than the CPU, for example, special purpose processors such as a digital signal processor (DSP), a graphics processing unit (GPU), a numerical processor, a vector processor and an image processor.

Further, at least some of the processes that are performed by the CPU may be performed by an integrated circuit (IC) or another digital circuit. Further, the integrated circuit and the digital circuit may include an analog circuit. The integrated circuit includes an LSI, an application specific integrated circuit (ASIC) and a programmable logic device (PLD). The PLD includes a field-programmable gate array (FPGA), for example. At least some of the processes that are performed by the CPU 11 may be executed by the combination of a processor and an integrated circuit. The combination is called, for example, a microcontroller (MCU), an SoC (System-on-a-chip), a system LSI, or a chipset.

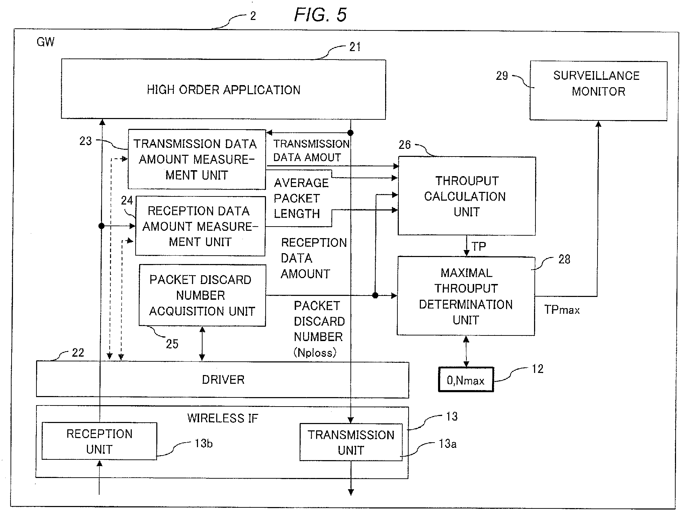

FIG. 5 is a diagram schematically illustrating the function of the GW 2. In FIG. 5, the GW 2 includes the wireless IF 13, a superordinate application 21, a driver 22, a transmission data amount measurement unit 23, a received data amount measurement unit 24, and a packet discard number acquisition unit 25. Furthermore, the GW 2 includes a throughput calculation unit 26, a maximal throughput determination unit 28, and a surveillance monitor 29. The maximal throughput determination unit 28 is an exemplary "generation unit" or "output unit".

The GW 2 communicates with a single or a plurality of wireless terminals 1 (1 : n (n is an integer of 1 or more)), using the wireless IF 13. The wireless IF 13 includes a transmission unit 13a that transmits packets to the wireless terminal 1, and a reception unit 13b that receives packets from the wireless terminal 1.

Packets received by the reception unit 13b are given to the superordinate application 21 through the driver 22, and are used for the processes in the superordinate application 21. The processes in the superordinate application 21 include a process of transmitting and receiving data with the communication apparatus 4 (FIG. 1) using the transmission path IF 14 (FIG. 4), which is not illustrated in FIG. 5.

Packets received from the communication apparatus 4 and packets generated in the superordinate application 21 are transmitted to the transmission unit 13a through the driver 22. The transmission unit 13a includes a transmission queue (buffer: not illustrated) in which packets are temporarily stored. The packets are read from the transmission queue at an appropriate timing, and are transmitted to the wireless terminal 1.

The packet stored in the transmission queue is discarded in the case where a maximal waiting time elapses in a state where the packet is not read. Alternatively, in the case where the transmission queue is full and where a new transmission object packet is generated, the new packet is discarded or the oldest packet in the transmission queue is discarded. In this way, in the case where the traffic amount exceeds the channel capacity, the discard of the transmission object packet occurs.

The wireless module or the driver measures the number of the discarded transmission object packets (packet discard number). The packet discard number acquisition unit 25 issues a packet discard number acquisition command to the driver 22, and thereby, can acquire the packet discard number through the driver 22. The packet discard number acquired here is the packet discard number on the MAC (Media Access Control) layer, and therefore, in the case where the length of the packet transmitted from the superordinate application is large, the packet discard number acquisition unit 25 sometimes divides the packet in accordance with the specification of the MAC layer. More precisely, it is desirable to use the transmitted number of packets or received number of packets on the MAC layer, which can be acquired by "hostapd_cli" or the like.

The transmission data amount measurement unit 23 measures the packet amount (transmission data amount) and average packet length that are transmitted from the superordinate application 21. The received data amount measurement unit 24 measures the packet amount (received data amount) that is received by the reception unit 13b and that is given to the superordinate application 21. The throughput calculation unit 26 receives the transmission data amount and the average packet length (average transmission packet length) from the transmission data amount measurement unit 23, receives the received data amount from the received data amount measurement unit 24, receives the packet discard number from the packet discard number acquisition unit 25, and calculates the throughput TP from the transmission data amount, the received data amount, the average packet length and the discard data amount.

Here, there is a possibility of the application of a wireless module previously including an interface that acquires the transmission data amount and the received data amount from the driver. In this case, using such an interface, the transmission data amount measurement unit 23 may acquire the transmission data amount and the number of packets from the driver 22 (see a dashed arrow in FIG. 5), and the received data amount measurement unit 24 may acquire the received data amount from the driver 22 (see a dashed arrow in FIG. 5).

The maximal throughput determination unit 28 determines the maximal throughput, using the packet discard number Nploss received from the packet discard number acquisition unit 25, the throughput TP received from the throughput calculation unit 26 and the maximal throughput TPmax previously stored in the memory 12. The maximal throughput is the index value of the channel capacity. The maximal throughput determination unit 28 outputs the maximal throughput. The maximal throughput is input to the surveillance monitor 29.

The surveillance monitor 29 performs the monitoring of the channel capacity, and the like. The surveillance monitor 29 uses the maximal throughput TPmax as the index value of the channel capacity. The surveillance monitor 29 controls the operation of the output device (a display device, a speaker, a lamp or the like) of the UI 16. For example, the surveillance monitor 29 displays the information with respect to the channel capacity output from the maximal throughput determination unit 28, for example, on the display device. For example, the surveillance monitor 29 displays the maximal throughput (TPmax), which is the index value of the channel capacity, on the display device, as an example of the information with respect to the channel capacity.

The CPU 11, by the execution of the program, operates as each of the superordinate application 21, the driver 22, the transmission data amount measurement unit 23, the received data amount measurement unit 24, the packet discard number acquisition unit 25, the throughput calculation unit 26, the maximal throughput determination unit 28 and the surveillance monitor 29.

### «Measurement of Received Data Amount»

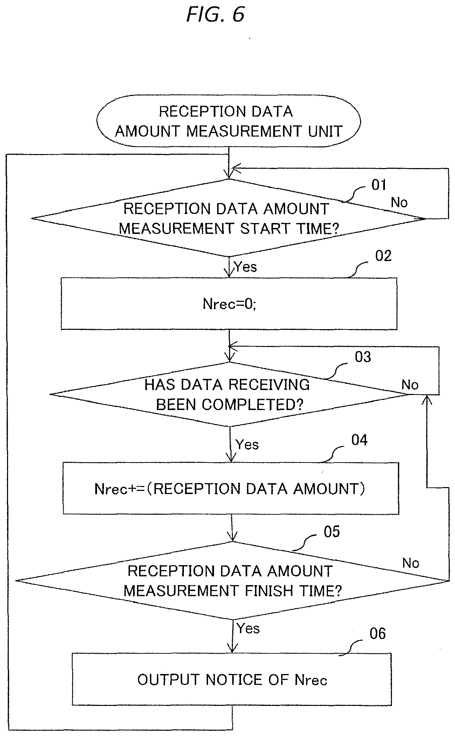

FIG. 6 is a flowchart illustrating a process example in the received data amount measurement unit 24 (CPU 11). The process of FIG. 6 is started, for example, with the start of the communication between the GW 2 and the wireless terminal 1. In the process of 01, the received data amount measurement unit 24 determines whether the current time is a measurement start time for the received data amount. If it is determined that the current time is the measurement start time, the process proceeds to 02, and if it is not determined that the current time is the measurement start time, the process returns to 01.

In the process of 02, the received data amount measurement unit 24 sets 0 (initial value) as the value of the Nrec indicating the received data amount. In the process of 03, the received data amount measurement unit 24 determines whether data (packet) has been received by the reception unit 13b. If it is determined that data has not been received, the process returns to 03. If it is determined that data has been received (the data receiving has been completed), the process proceeds to 04.

In the process of 04, the received data amount measurement unit 24 adds the amount of the data received (received data amount) in 03, to the value of Nrec. In the process of 05, the received data amount measurement unit 24 determines whether the current time is a measurement finish time for the received data amount. If it is determined that the current time is the measurement finish time, the process proceeds to 06, and if it is not determined that the current time is the measurement finish time, the process returns to 03. In the process of 06, the received data amount measurement unit 24 gives (outputs) notice of the value of Nrec. Thereafter, the process returns to 01. The value of the received data amount Nrec is given to the throughput calculation unit 26.

### «Measurement of Transmission Data Amount»

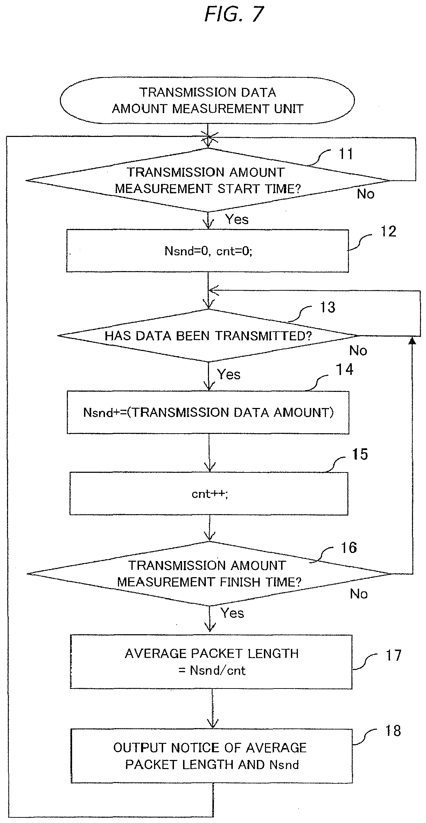

FIG. 7 is a flowchart illustrating a process example in the transmission data amount measurement unit 23 (CPU 11). In the process of 11, the transmission data amount measurement unit 23 determines whether the current time is a measurement start time for the transmission data amount. If it is determined that the current time is the measurement start time, the process proceeds to 12, and if it is not determined that the current time is the measurement start time, the process returns to 11.

In the process of 12, the transmission data amount measurement unit 23 sets 0 (initial value) as the value of Nsnd indicating the transmission data amount and a counter value cnt. In the process of 13, the transmission data amount measurement unit 23 determines whether data (packet) has been transmitted from the superordinate application 21. If it is determined that data has not been transmitted, the process returns to 13. If it is determined that data has been transmitted, the process proceeds to 14.

In the process of 14, the transmission data amount measurement unit 23 adds the amount of the transmitted data (packet), to the value of Nsnd. After the data amount is added to Nsnd in the process of 14, the transmission data amount measurement unit 23 increments the counter value cnt (adds 1) (the process of 15), and the process proceeds to 16.

In the process of 16, the transmission data amount measurement unit 23 determines whether the current time is a measurement finish time for the transmission data amount. If it is determined that the current time is the measurement finish time, the process proceeds to 17, and if it is not determined that the current time is the measurement finish time, the process returns to 13.

In the process of 17, the transmission data amount measurement unit 23 calculates the average packet length, by dividing the value of Nsnd by the counter value cnt. In the process of 18, the transmission data amount measurement unit 23 gives (outputs) notice of the average packet length and the transmission data amount Nsnd. Thereafter, the process returns to 11. The value of the transmission data amount Nsnd and the value of the average packet length are given to the throughput calculation unit 26.

In this way, the received data amount measurement unit 24 and the transmission data amount measurement unit 23 synchronously measure the received data amount Nrec, the transmission data amount Nsnd and the average packet length in a predetermined period (unit time) from the measurement start time to the measurement finish time, and supplies them to the throughput calculation unit 26. For example, the received data amount Nrec, the transmission data amount Nsnd and the average packet length can be periodically measured using an unillustrated timer.

### «Throughput Calculation»

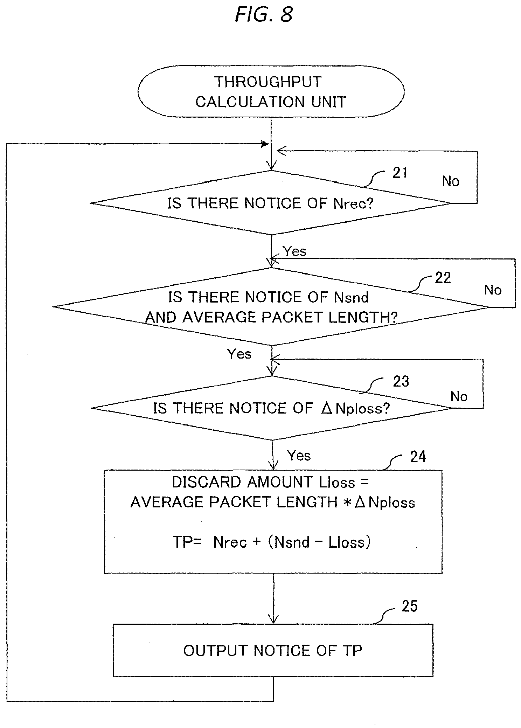

FIG. 8 is a flowchart illustrating a process example in the throughput calculation unit 26 (CPU 11). In the process of 21, the throughput calculation unit 26 waits for the value of Nrec. If Nrec is received, the process proceeds to 22. If not, the process returns to 21.

In the process of 22, the throughput calculation unit 26 waits for the values of Nsnd and the average packet length. If Nsnd and the average packet length are received, the process proceeds to 23. If not, the process returns to 22.

In the process of 23, the throughput calculation unit 26 waits for the value of ΔNploss. If Nsnd and the average packet length are received, the process proceeds to 24. If not, the process returns to 23. Here, the order of the process of 21, the process of 22 and the process of 23 may be an arbitrary order.

In the process of 24, the throughput calculation unit 26 calculates a discard amount Lloss, by multiplying the average packet length and the packet discard number ΔNploss. In the construction according to the embodiment, although the packet discard number is measured, each packet length of the discard packets is not measured (not recorded). Therefore, the discard amount (discarded data amount) is estimated by multiplying the average value (average packet length) of the transmission packet length by the packet discard number. Furthermore, the throughput calculation unit 26 evaluates the transmission amount, by subtracting the discard amount Lloss from the value of the transmission data amount Nsnd, and evaluates the value of the throughput TP, by adding the transmission amount to the value of the received data amount Nrec.

In the process of 25, the throughput calculation unit 26 gives (outputs) notice of the value of the throughput TP. Thereafter, the process returns to 21. The throughput TP is supplied to the maximal throughput determination unit 28. The above (transmission data amount Nsnd - discard amount Lloss) is an exemplary "transmission amount" that is used for the calculation of the throughput TP, and the received data amount Nrec is an exemplary "reception amount" that is used for the calculation of the throughput TP. Here, in the case where the packet has a fixed length (the packet size is constant), the discard amount can be calculated by multiplying the packet discard number and the packet size, and therefore, the above-described process for the calculation of the average packet length can be omitted.

### «Packet Discard Number Acquisition»

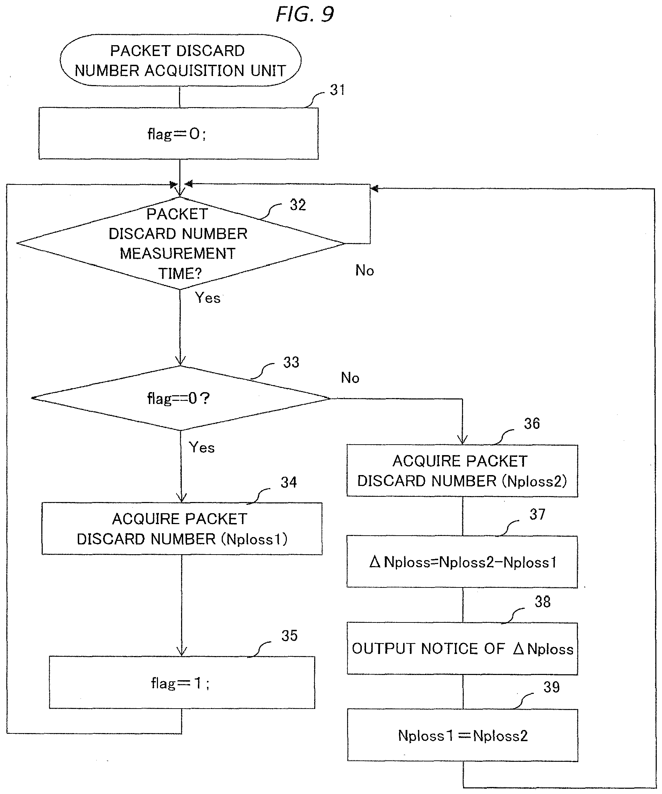

FIG. 9 is a flowchart illustrating a process example in the packet discard number acquisition unit 25 (CPU 11). In the process of 31, the packet discard number acquisition unit sets an initial value of 0 as a flag value flag. Further, flag = 0 means that the packet discard number is 0.

In the process of 32, the packet discard number acquisition unit 25 determines whether the current time is a measurement time for the packet discard number. If it is determined that the current time is the measurement time, the process proceeds to 33. If not, the process returns to 32.

In the process of 33, the packet discard number acquisition unit 25 determines whether the value of flag is 0. If it is determined that the value of flag is 0, the process proceeds to 34. If not, the process proceeds to 36.

In the process of 34, the packet discard number acquisition unit 25 acquires the packet discard number (Nploss1). The process of 34 is performed by inquiring the packet discard number to the superordinate application 21 using a predetermined command. In the process of 35, the packet discard number acquisition unit sets 1 as the value of flag, and the process returns to 32. Here, the last measurement time and current measurement time in 32 coincide with the measurement start time and measurement finish time for the received data amount and transmission data amount, and the time length between the two measurement times coincides with the predetermined period that is used in the measurements of the received data and the transmission data amount.

In the process of 36, the packet discard number acquisition unit 25 acquires the packet discard number (Nploss2). In the process of 37, the packet discard number acquisition unit 25 evaluates the difference ΔNploss between Nploss 2 and Nploss. In the process of 38, the packet discard number acquisition unit 25 gives (outputs) notice of the value of ΔNploss, as the packet discard number Nploss in the predetermined period. Nploss is input to the maximal throughput determination unit 28.

In the process of 39, the packet discard number acquisition unit 25 sets the value of Npless2 (the value in the current measurement cycle), as the Npless1 (the value in the last measurement cycle). Thereafter, the process returns to 32.

### «Maximal Throughput Determination»

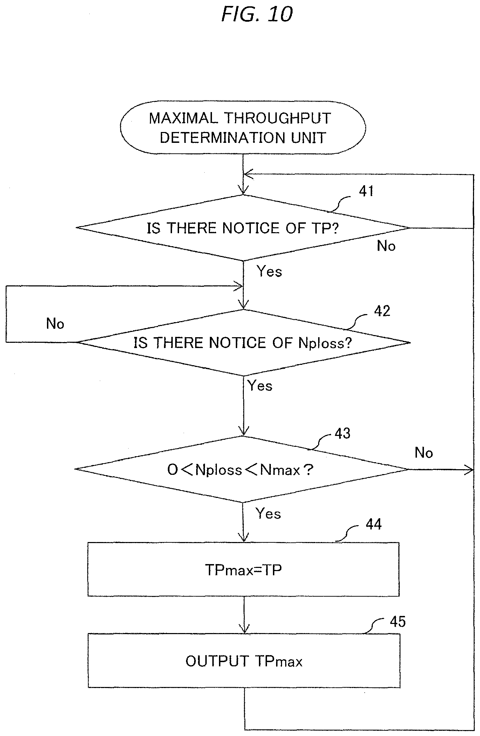

FIG. 10 is a flowchart illustrating a process example in the maximal throughput determination unit 28 (CPU 11). In the process of 41, the maximal throughput determination unit 28 determines whether there is notice (input) of TP. If it is determined that TP has not been input, the process returns to 41, and if it is determined that TP has been input, the process proceeds to 42.

In the process of 42, the maximal throughput determination unit 28 determines whether there is notice (input) of Nploss. If it is determined that Nploss has not been input, the process returns to 42, and if Nploss has been input, the process proceeds to 43. The order of the process of 41 and the process of 42 may be reversed.

In the process of 43, the maximal throughput determination unit 28 determines whether the value of Nploss satisfies the condition of 0 < Nploss < Nmax. The data indicating the condition is stored in the memory 12. If it is determined that the condition is satisfied, the process proceeds to 44. If not, the process returns to 41. The state where the value of Nploss is in the range of 0 < Nploss < Nmax means that the usage rate of the wireless resource is maximal.

In the process of 44, the maximal throughput determination unit 28 sets (updates) the maximal throughput TPmax, to the value of the throughput TP for which the input is detected in the process of 41. In the process of 45, the maximal throughput determination unit 28 outputs TPmax. Thereafter, the process returns to 41. TPmax is input to the surveillance monitor 29, and is displayed on a display device, for example. Further, the value of TPmax can be stored in the memory 12.

Here, in the example of FIG. 10, in the case where the determination (judgment) of No is made in the process of 43, the value of TPmax is not output. In this case, the surveillance monitor 29 continues the output (the display or the like) of the last input value of TPmax. Instead of this construction, the maximal throughput determination unit 28 may store the last value of TPmax in the memory 12, for example, and may output the value of TPmax stored in the memory 12 in the process of 45, in the case where the determination (judgment) of No is made in the process of 43. The surveillance monitor 29 may update the display content, even when TPmax is kept at the same value.

### «Function and Effect»

According to Embodiment 1, in the GW 2, using the throughput TP and the packet discard number Nploss in the predetermined period, the maximal throughput TPmax, which is the index value of the channel capacity, is determined and output, as an example of the information with respect to the channel capacity between the GW 2 and the wireless terminal 1. The administrator of the GW 2, that is, the operator of the wireless communication system or the like can know the current channel capacity, by referring to TPmax.

It is conceivable that the maximal throughput TPmax does not satisfy a throughput demanded by the superordinate application, the communication apparatus 4, an application to be executed on the communication apparatus 4, or the like, depending on the environment in which the wireless communication system is installed. Further, it is conceivable that the channel capacity is insufficient to satisfy the throughput (the margin of the channel capacity is small). In these cases, it is possible to take a measure such as the addition (new installation) of the GW 2 and the decrease in the number of the wireless terminals 1 in the coverage. Further, in the GW 2, it is possible to take a measure of altering the transmission interval of packets, or the like.

### «Modification»

In Embodiment 1, an example in which the GW 2 as an example of the wireless communication apparatus is a "traffic monitoring apparatus" has been described. However, a computer (information processing device) that includes the CPU 11, the memory 12 and the transmission path IF 14 as the traffic monitoring apparatus and that communicates with the GW 2 may operate as the traffic monitoring apparatus.

That is, the information processing device receives TP (or Nrec, the average packet length and Nsnd) and Nploss from the GW 2, and operates as an apparatus that includes the throughput calculation unit 26 and the maximal throughput determination unit 28, by the execution of a program. In this case, the surveillance monitor 29 may output TPmax.

### [Embodiment 2]

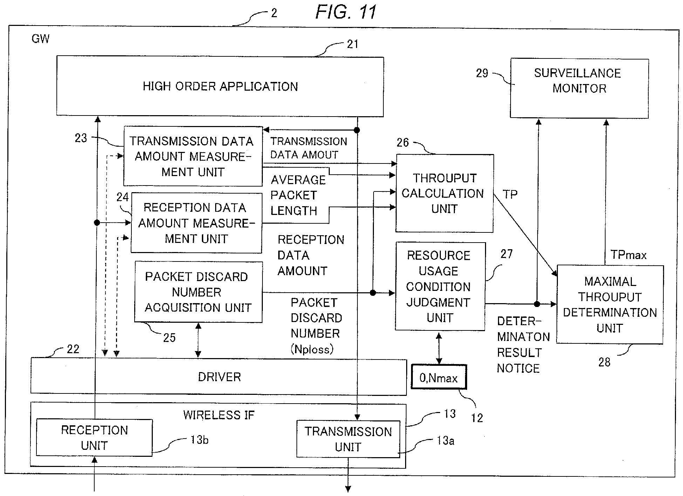

Next, Embodiment 2 will be described. The construction of Embodiment 2 has points in common with the construction of Embodiment 1. Therefore, different points will be mainly described, and the description of the common points will be omitted. FIG. 11 is a diagram schematically illustrating the function of a GW 2 in Embodiment 2. The GW 2 in Embodiment 2 can employ the hardware construction (FIG. 4) in Embodiment 1.

In FIG. 11, the difference from Embodiment 1 (FIG. 5) is that a resource usage condition determination unit 27 is provided between the packet discard number acquisition unit 25 and the maximal throughput determination unit 28. The CPU 11 operates as the resource usage condition determination unit 27, by the execution of a program. The resource usage condition determination unit 27 and the maximal throughput determination unit 28 are exemplary "generation units" or "output units".

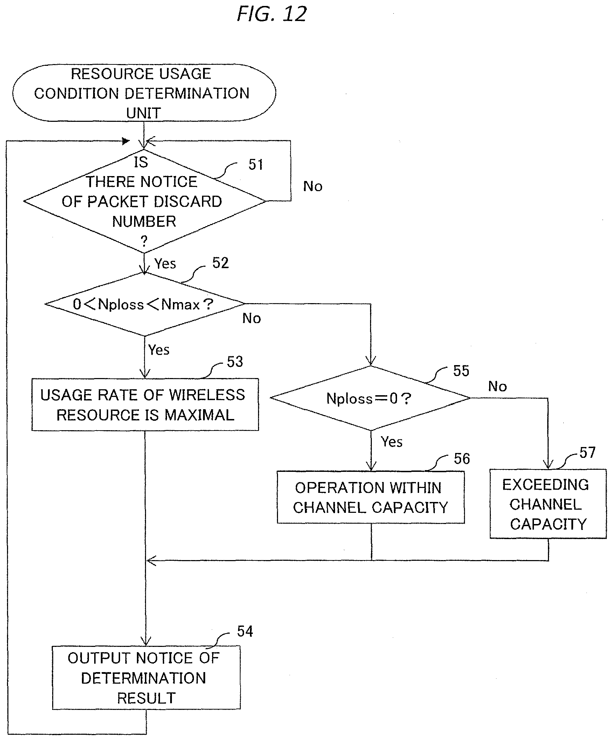

FIG. 12 is a flowchart illustrating a process example in the resource usage condition determination unit 27 (CPU 11). In the process of 51, the resource usage condition determination unit 27 determines whether there is notice (input) of the packet discard number Nploss. If it is determined that the packet discard number has not been input, the process returns to 51. On the other hand, if the packet discard number has been input, the process proceeds to 52.

In the process of 52, the resource usage condition determination unit 27 determines whether the value of Nploss is (satisfies the condition) in the range of 0 < Nploss < Nmax (which is stored in the memory 12). If it is determined that the value of Nploss is not in the range of 0 < Nploss < Nmax, the process proceeds to 55. On the other hand, if it is determined that the value of Nploss is in the range of 0 < Nploss < Nmax, the process proceeds to 53. In the process of 53, the resource usage condition determination unit 27 determines that the usage rate of the wireless resource is maximal, and the process proceeds to 54.

If the process proceeds to 55, the resource usage condition determination unit 27 determines whether Nploss is 0. If it is determined that Nploss is 0, the resource usage condition determination unit 27 determines that the GW 2 is being operated within the channel capacity (the traffic amount falls within the channel capacity) (56), and the process proceeds to 54.

If it is determined that Nploss is not 0, Nmax ≤ Nploss holds. Therefore, the resource usage condition determination unit 27 determines that the traffic amount is exceeding the channel capacity (the process of 57), and the process proceeds to 54. In the process of 54, the resource usage condition determination unit 27 notifies the maximal throughput determination unit 28 of the result of the determination performed in one of 53, 56 and 57. Thereafter, the process returns to 51.

As illustrated in FIG. 11, the determination result of the resource usage condition determination unit 27 is input to the surveillance monitor 29, as the information with respect to the channel capacity, and is output (displayed) by the surveillance monitor 29. Thereby, from the display content, the administrator, operator and others of the GW 2 can know the operation within the channel capacity, the exceedance of the channel capacity, and the like.

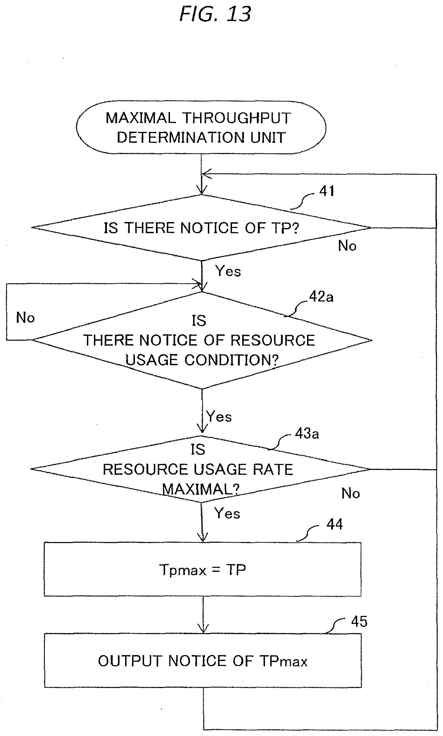

FIG. 13 is a flowchart illustrating a process example in the maximal throughput determination unit 28 in Embodiment 2. There is a difference from Embodiment 1 (FIG. 10) in that processes of 42a and 43a are provided instead of 42 and 43.

In the process of 42a, the maximal throughput determination unit 28 determines whether there is notice of the determination result from the resource usage condition determination unit 27. If it is determined that there is the notice, the process proceeds to 43a. If not, the process returns to 42a.

In the process of 43a, the maximal throughput determination unit 28 determines whether the content of the notice indicates that the usage rate of the wireless resource is maximal (the resource usage rate is maximal). If it is determined that the resource usage rate is maximal, the process proceeds to 44. If not, the process returns to 41.

Except the above, the process illustrated in FIG. 13 is the same as the process illustrated in FIG. 10, and therefore, the description is omitted. The order of the process of 41 and the process of 42a may be reversed, and when the determination of No is made in 43a, the last value of TPmax may be output to the surveillance monitor 29. Except the above, the construction of Embodiment 2 is the same as the construction of Embodiment 1, and therefore, the description is omitted.

In Embodiment 2, in addition to the effect obtained in Embodiment 1, the following effect is obtained. That is, according to Embodiment 2, in addition to TPmax, which is the index value of the channel capacity, the resource usage condition, namely, the determination result of the resource usage condition determination unit 27 is output (displayed, for example). Thereby, the operator can know the channel capacity more exactly.

### [Embodiment 3]

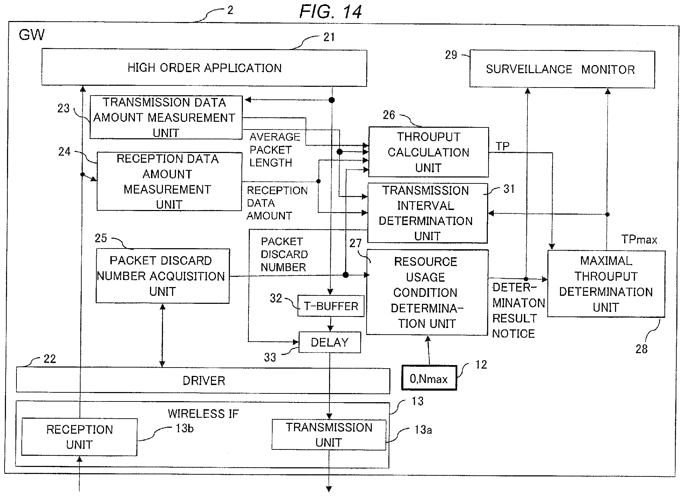

Next, Embodiment 3 will be described. The construction of Embodiment 3 has points in common with the construction of Embodiment 2. Therefore, different points will be mainly described, and the description of the common points will be omitted. FIG. 14 is a diagram schematically illustrating the function of a GW 2 in Embodiment 3.

In Embodiment 3, a traffic control is performed such that the transmission data amount and the received data amount do not exceed TPmax. The GW 2 illustrated in FIG. 14 is different from Embodiment 2 in that a transmission interval determination unit 31, a transmission buffer 32 and a delay element (delay) 33 are provided in addition to the construction (FIG. 11) in Embodiment 2. The CPU 11 operates as the transmission interval determination unit 31.

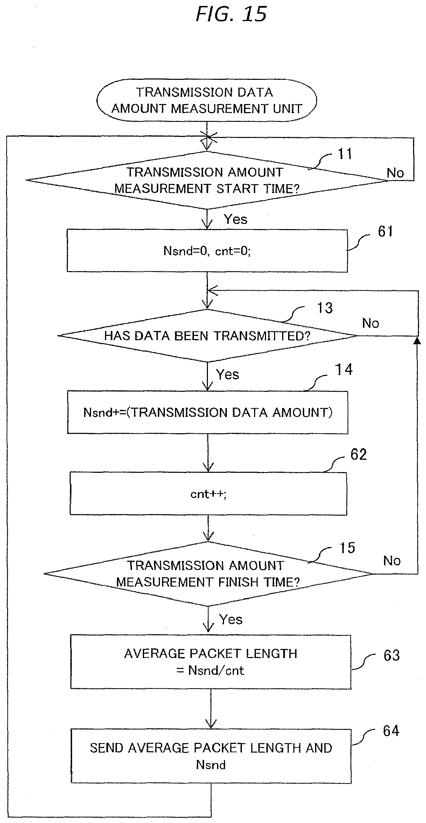

FIG. 15 is a flowchart illustrating a process example in a transmission data amount measurement unit 23 (CPU 11) in Embodiment 3. The process of FIG. 15 is the same process as Embodiments 1, 2 (FIG. 7).

In FIG. 15, the transmission data amount measurement unit 23, in the process of 11, determines whether the current time is the measurement start time for the transmission data amount. If it is determined that the current time is the measurement start time, the process proceeds to 61. If not, the process returns to 11.

In the process of 61, the transmission data amount measurement unit 23 sets an initial value of 0 as the value of Nsnd and the counter value cnt. The processes of 13 and 14 are the same as Embodiments 1, 2 (FIG. 7), and the amount of the transmitted data (packet) is added to Nsnd. After the data amount is added to Nsnd in the process of 14, the transmission data amount measurement unit 23 increments the counter value cnt (adds 1) (the process of 62), and the process proceeds to 15.

The process of 15 is the same as Embodiments 1, 2. If it is determined that the current time is the measurement finish time for the transmission data amount in 15, the process proceeds to 63. If not, the process returns to 13.

In the process of 63, the transmission data amount measurement unit 23 calculates the average packet length, by dividing the value of Nsnd by the counter value cnt. In the process of 64, the transmission data amount measurement unit 23 gives (outputs) notice of the average packet length and the transmission data amount Nsnd. Thereafter, the process returns to 11.

As illustrated in FIG. 14, the transmission data amount Nsnd is input to the throughput calculation unit 26, and the average packet length is input to the throughput calculation unit 26 and the transmission interval determination unit 31. The average packet length is handled as the average transmission packet length, in the transmission interval determination unit 31. Further, the average packet length from the transmission data amount measurement unit 23, the received data amount Nrec from the received data amount measurement unit 24, and the maximal throughput TPmax output from the maximal throughput determination unit 28 are input to the transmission interval determination unit 31.

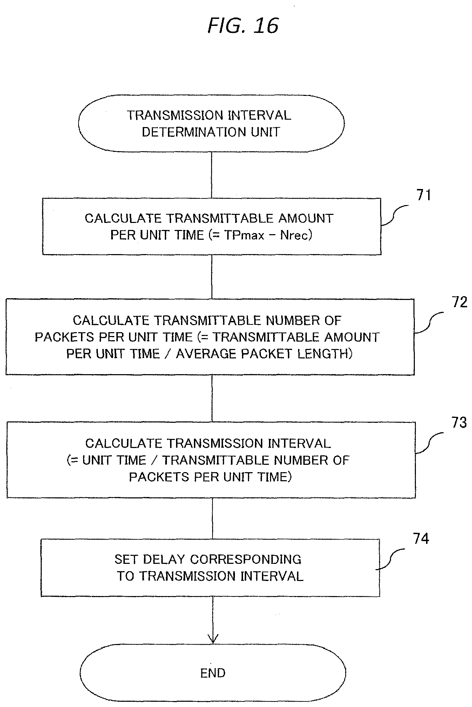

FIG. 16 is a flowchart illustrating a process example in the transmission interval determination unit 31 (CPU 11). In the process of 71, the transmission interval determination unit 31 calculates the transmittable amount per unit time, by subtracting the received data amount Nrec from the maximal throughput TPmax. As the unit time, the above-described predetermined period that is used in the measurements of the transmission data amount, the received data amount and the like is applied. The length of the predetermined period can be appropriately set, and therefore, the unit time also can be appropriately set.

In the process of 72, the transmission interval determination unit 31 calculates the transmittable number of packets per unit time, by dividing the transmittable amount per unit time by the average transmission packet length. In the process of 73, the transmission interval determination unit 31 calculates the transmission interval, by dividing the unit time by the transmittable number of packets per unit time.

In the process of 74, the transmission interval determination unit 31 gives a delay corresponding to the transmission interval, to the delay element 33. Thereby, the packets temporarily stored in the transmission buffer 32 are transmitted at the determined interval, by the transmission unit 13a.

As a result, the value of the throughput TP to be measured every predetermined period does not exceed TPmax, as long as the received data amount is constant. Therefore, according to Embodiment 3, it is possible to perform the communication between the GW 2 and the wireless terminal 1 such that the traffic amount falls within the channel capacity, in addition to the function effects that are obtained in Embodiments 1, 2.

### [Embodiment 4]

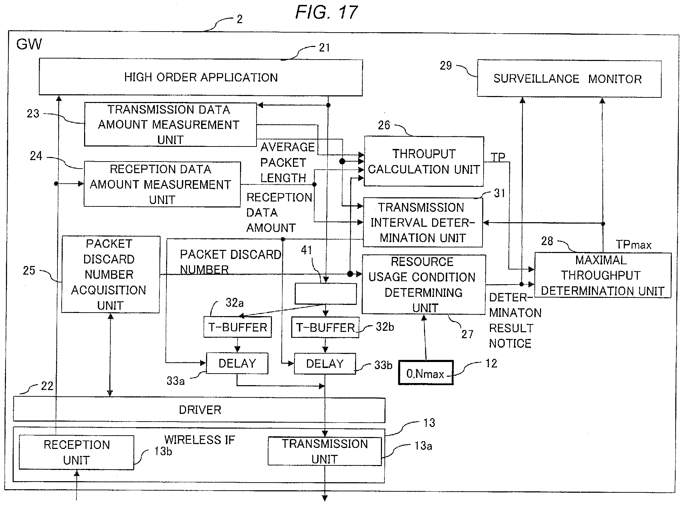

Next, Embodiment 4 will be described. The construction of Embodiment 4 has points in common with the construction of Embodiment 3. Therefore, different points will be mainly described, and the description of the common points will be omitted. FIG. 17 is a diagram schematically illustrating the function of a GW 2 in Embodiment 4.

In Embodiment 4, similarly to Embodiment 3, a traffic control is performed such that the transmission data amount and the received data amount do not exceed TPmax. The GW 2 illustrated in FIG. 17 is different from Embodiment 2 in that the transmission interval determination unit 31, a distribution unit 41 for packets, a plurality of transmission buffers 32 and a plurality of delay elements (delays) 33 are provided in addition to the construction (FIG. 11) in Embodiment 2. The CPU 11 operates as the transmission interval determination unit 31.

Packets can be classified into a plurality of packet types. In Embodiment 4, a plurality of series each of which includes the transmission buffer 32 and the delay element 33 are provided corresponding to the number of the packet types. FIG. 17 exemplifies a first series formed by a transmission buffer 32a and a delay element 33a, a second series formed by a transmission buffer 32b and a delay element 33b.

The distribution unit 41 identifies the packet type for each of the transmission object packets that are input, and distributes the packet to a series corresponding to the packet type. In the example of FIG. 17, packets (referred to as first type packets) of packet types having high real-time properties are distributed to a transmission buffer 32a of the first series, and the packets other than the first type packets are distributed to a transmission buffer 32b of the second series.

The transmission interval determination unit 31 determines the transmission interval corresponding to the packet type, and reflects the determined result in the delay element 33a and the delay element 33b. For example, the transmission interval determination unit 31 sets zero as the delay of the delay element 33a, in view of a high real-time property, and sets a delay corresponding to the transmission interval evaluated in the process illustrated in FIG. 16, for the delay element 33b. Incidentally, the allowable delay information corresponding to the packet type may be input to the transmission interval determination unit, and a delay that corresponds to the transmission interval and for which the allowable delay information is taken into consideration may be set.

According to Embodiment 4, in the case where the allowable delay differs depending on the packet type, it is possible to perform such a traffic control that packets are transmitted within allowable delays and the traffic amount is within the channel capacity.

### [Embodiment 5]

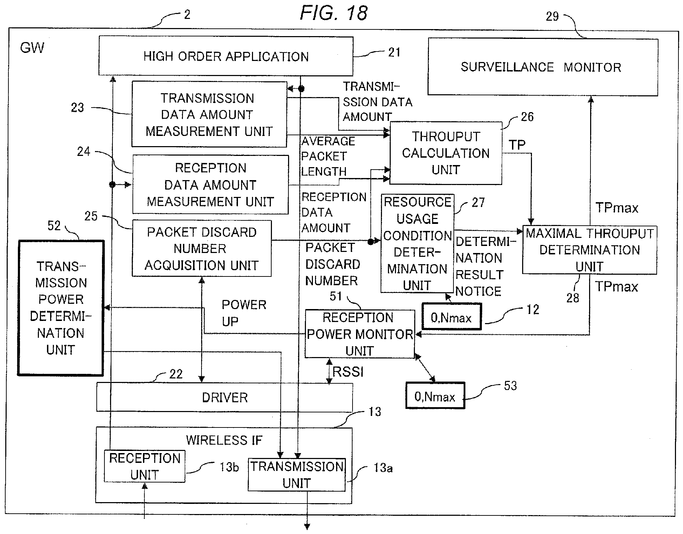

Next, Embodiment 5 will be described. The construction of Embodiment 5 has points in common with the construction of Embodiment 2. Therefore, different points will be mainly described, and the description of the common points will be omitted. FIG. 18 is a diagram schematically illustrating the function of a GW 2 in Embodiment 5. The GW 2 illustrated in FIG. 18 includes a received power monitoring unit 51 and a transmission power determination unit 52, in addition to the construction (FIG. 11) of Embodiment 2. The CPU 11 operates as the received power monitoring unit 51 and the transmission power determination unit 52, by the execution of a program.

The received power monitoring unit 51, for each wireless terminal (STA) 1, regularly acquires RSSI (Received Signal Strength Indicator) from the superordinate application 21 through the driver 22, and manages it. Here, the received power monitoring unit 51 manages not the original value of the RSSI but the attenuation amount.

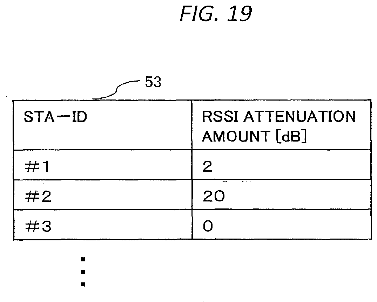

The relation between the wireless terminal 1 and the RSSI is stored in a table 53 stored in the memory 12. FIG. 19 illustrates a data structure example of the table 53. As an example, in the table 53, one or more records each of which indicates the identifier (STA-ID) of the wireless terminal 1 and the attenuation amount of the RRSI are stored.

TPmax output from the maximal throughput determination unit 28 is input to the received power monitoring unit 51. In the case where the value of TPmax decreases from the last value by a certain value or more, the received power monitoring unit 51 outputs an instruction to raise the transmission power of the wireless terminal 1 for which the RSSI attenuates by the certain value or more.

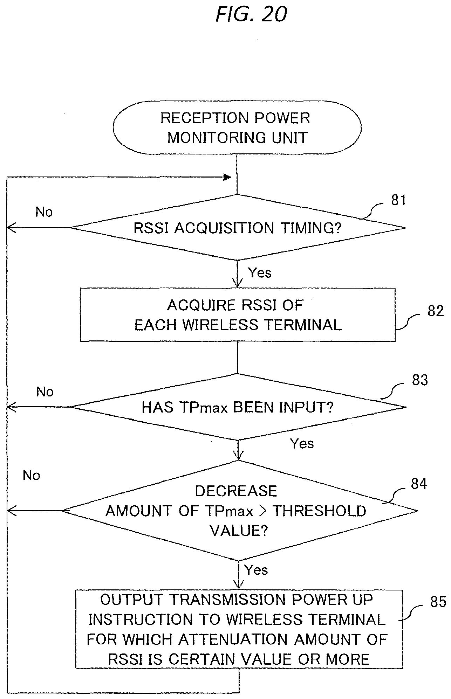

FIG. 20 is a flowchart illustrating a process example in the received power monitoring unit 51 (CPU 11). In the process of 81, the received power monitoring unit 51 determines whether the current time is an acquisition timing for the RSSI. If it is determined that the current time is the acquisition timing, the process proceeds to 82. If not, the process returns to 81.

In the process of 82, the received power monitoring unit 51 acquires the RSSI of each wireless terminal 1, and records the attenuation amount of the RRSI of each wireless terminal 1, in the table 53. In the process of 83, the received power monitoring unit 51 determines whether TPmax has been input from the maximal throughput determination unit 28. If TPmax has been input, the process proceeds to 84. If not, the process returns to 81.

In the process of 84, the received power monitoring unit 51 determines whether the decrease amount from the last value of TPmax exceeds a threshold value. The last value of TPmax and the threshold value are stored in the memory 12. If it is determined that the decrease amount exceeds the threshold value, the process proceeds to 85. If not, the process returns to 81.

In the process of 85, the received power monitoring unit 51 refers to the table 53, and outputs a transmission power UP instruction to the wireless terminal 1 for which the attenuation amount of the RRSI is the certain value or more. As illustrated in FIG. 18, the transmission power UP instruction is input to the transmission power determination unit 52. In this way, in Embodiment 5, when the attenuation amount of the received signal strength indicator (RSSI) of a wireless terminal 1 at the time of the decrease in the maximal throughput TPmax is beyond a predetermined range, the transmission power UP instruction (the instruction to increase the transmission power) to the wireless terminal 1 is output.

The transmission power determination unit 52 can determine the transmission power of each wireless terminal 1, and determines the transmission power of the wireless terminal 1 corresponding to the transmission power UP instruction when receiving the transmission power UP instruction. The transmission power determination unit 52 sends (supplies) an instruction (instruction packet) to transmit packets at the determined transmission power, to the target wireless terminal 1, through the transmission unit 13a.

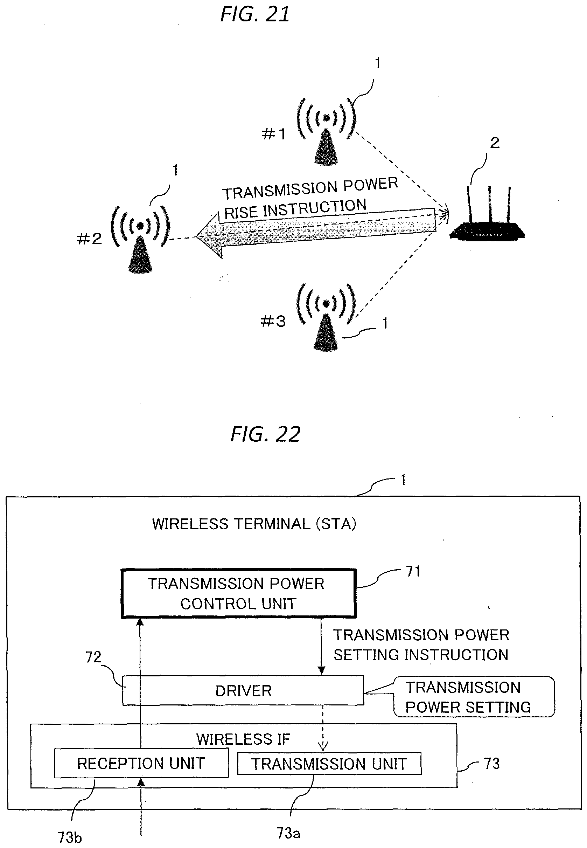

As an example, suppose that the GW 2 wirelessly communicates with a plurality of wireless terminals 1 (a wireless terminal #1, a wireless terminal #2 and a wireless terminal #3) as illustrated in FIG. 21. The attenuation amounts of the RSSIs of the wireless terminal #1, the wireless terminal #2 and the wireless terminal #3 are indicated in the table 53 of FIG. 19, and it is assumed that the attenuation amount for the wireless terminal #2 is the certain value or more.

As illustrated in FIG. 21, in the case where the decrease amount of TPmax exceeds the certain value (threshold value), the GW 2 instructs the wireless terminal #2 to raise (increase) the transmission power. In accordance with the instruction, the wireless terminal #2 raises (increases) the transmission power.

FIG. 22 is a diagram schematically illustrating the function of a wireless terminal 1 that operates as the wireless terminal #2. For example, the wireless terminal 1 can have the same hardware construction as the hardware construction of the GW 2 illustrated in FIG. 4. However, the wireless terminal 1 may exclude the transmission path IF 14 and UI 16 of the construction in FIG. 4.

A wireless IF 73 including a transmission unit 73a and a reception unit 73b illustrated in FIG. 22 can be formed using the wireless IF 13. A driver 72 and a transmission power control unit 71 are actualized when the CPU 11 executes a program stored in the memory 12. Although the illustration in FIG. 22 is omitted, the wireless terminal 1 includes a superordinate application that transmits and receives packets with the communication apparatus 4 through the GW 2. In some cases, the wireless terminal 1 includes a sensor for obtaining sensing data.

The packet containing the transmission power rise instruction transmitted from the GW 2 is received by the reception unit 73b, and is received through the driver 72 by the transmission power control unit 71. The transmission power control unit 71 gives, to the driver 72, a setting instruction for the transmission power in accordance with the transmission power rise instruction. The driver 72 performs a rise setting for the transmission power of the transmission unit 73. Thereby, the wireless terminal 1 transmits packets at the transmission power raised in response to the instruction.

By the transmission power rise, the RSSI for the wireless terminal #2 rises. Thereby, it is possible to normally receive packets that are transmitted from the wireless terminal #2, and it is possible to expect the decrease in the number of retransmissions and the improvement of the throughput. The constructions described in Embodiments 1 to 5 can be appropriately combined.

According to the above-described embodiments, it is possible to know the channel capacity between the wireless communication apparatus and the wireless terminal.

## Claims

1. A program making a computer execute a process comprising:
outputting information with respect to a channel capacity between a wireless communication apparatus and a wireless terminal, based on throughput in communication between the wireless communication apparatus and the wireless terminal and a discard number of packets that are transmission objects from the wireless communication apparatus to the wireless terminal.

2. The program according to claim 1, wherein the outputting the information with respect to the channel capacity includes:
evaluating an index value of the channel capacity in a unit time, based on the throughput in the unit time and the discard number of the packets in the unit time; and
outputting the index value.

3. The program according to claim 2, wherein:
the outputting the information with respect to the channel capacity includes outputting a maximal throughput as the index value,
the maximal throughput is measured when the discard number of the packets in the unit time is larger than zero and smaller than an allowable discard number; and
the maximal throughput is a total value of a reception amount from the wireless terminal in the unit time and a transmission amount to the wireless terminal in the unit time.

4. The program according to any one of claims 1 to 3, wherein the outputting the information with respect to the channel capacity includes outputting information indicating that a traffic amount between the wireless communication apparatus and the wireless terminal exceeds the channel capacity when the discard number of the packets in a unit time exceeds an allowable discard number.

5. The program according to any one of claims 1 to 4, wherein the outputting the information with respect to the channel capacity includes outputting information indicating that a traffic amount between the wireless communication apparatus and the wireless terminal does not exceed the channel capacity when the discard number of the packets in a unit time is zero.

6. The program according to any one of claims 1 to 5, wherein the outputting the information with respect to the channel capacity includes outputting information indicating that a usage rate of a wireless resource with respect to the communication between the wireless communication apparatus and the wireless terminal is maximal when the discard number of the packets in a unit time is larger than zero and smaller than an allowable discard number.

7. The program according to any one of claims 3 to 6, wherein the process further comprises:
calculating a transmittable amount in a unit time by subtracting a received data amount in the unit time from the maximal throughput;
calculating a transmittable number of packets in the unit time by dividing the transmittable amount in the unit time by an average transmission packet length;
calculating a transmission interval of the packets by dividing the transmittable number of packets in the unit time by the unit time; and
transmitting the packets that are the transmission objects, to the wireless terminal, at the transmission interval.

8. The program according to claim 7, wherein the process further comprises performing transmission at the transmission interval that is evaluated for a packet having at least one packet type of a plurality of packet types, the plurality of packets being included in the packets that are the transmission objects to the wireless terminal.

9. The program according to any one of claims 3 to 8, wherein the process further comprises transmitting an instruction to increase transmission power, to the wireless terminal, when an attenuation amount of received signal strength indicator from the wireless terminal at the time of decrease in the maximal throughput is beyond a predetermined range.

10. A traffic monitoring apparatus, comprising:
a generation unit that generates information with respect to a channel capacity between a wireless communication apparatus and a wireless terminal, based on throughput in communication between the wireless communication apparatus and the wireless terminal and a discard number of packets that are transmission objects from the wireless communication apparatus to the wireless terminal; and
an output unit that outputs the information with respect to the channel capacity.

11. A traffic monitoring method, comprising:
generating information with respect to a channel capacity between a wireless communication apparatus and a wireless terminal, based on throughput in communication between the wireless communication apparatus and the wireless terminal and a discard number of packets that are transmission objects from the wireless communication apparatus to the wireless terminal; and
outputting the information with respect to the channel capacity.

12. A wireless terminal that wirelessly communicates with a wireless communication apparatus, the wireless terminal comprising:
a reception unit that receives an instruction to increase transmission power, from the wireless communication apparatus, when an attenuation amount of received signal strength indicator from the wireless terminal at the time of decrease in a maximal throughput is beyond a predetermined range, the maximal throughput being an index value of a channel capacity between the wireless communication apparatus and the wireless terminal; and
a transmission power control unit that performs a process of increasing the transmission power to the wireless communication apparatus.
